# EUROPEAN PATENT APPLICATION

(11) **EP 3 330 531 A1**
(43) Date of publication of application: **06.06.2018**
(21) Application number: 17204816.7
(22) Date of filing: 30.11.2017
(51) Int. Cl.: F03D 5/06, H02N 2/18

(54) **ENERGY HARVESTING DEVICE**

(30) Priority: 01.12.2016 GB 201620410
(71) Applicant: Majoe, Dennis, Eastleigh, Hampshire SO50 9LH (GB)
(72) Inventor: Majoe, Dennis, Eastleigh, Hampshire SO50 9LH (GB)
(74) Representative: Brooks, Nigel Samuel

(57) **Abstract**

An energy harvesting device comprising a pivot or flexible connection, at which is connected a complementary member and a foil. The foil is adapted to move towards and away from the complementary member. Spaced from the foil is a complementary surface where fluid flows between the complementary surface and the foil. The device also has means for converting kinetic energy into electrical energy. Fluid flows between the foil and the complementary surface, drawing the former towards the latter. Once the foil is drawn to the complementary surface so that fluid flow between the former and the latter is blocked the pressure of the fluid on one side of the foil is such that the foil is forced away from the complementary surface so fluid can flow again. The oscillating movement of the foil being drawn toward and forced away from the complementary surface repeats, the foil oscillating until there is no fluid flow.

## Description

The present invention relates to an energy harvesting device for converting fluid flow kinetic energy to electrical energy and the flow being in particular but not exclusively wind flow.

In many wind energy to electrical energy generators a turbine principle is applied with large rotating blades connected to an axle and gear chain driving a dynamo. Physically it is considered to be a moving structure which some people find inappropriate from an aesthetic point of view.

The large and heavy turbines are difficult and costly to install. They require wind speeds above 5m/s to rotate and wind speeds of 10 to 15 m/s to run efficiently. However in fact wind speeds of 5 to 6m/s occur with much higher frequency probability. In general they are very large because smaller blade area swept turbines are less efficient, however this makes them difficult to install in well-populated urban areas because they are seen as dangerous, they block views and they do not match the local architecture. Public opposition to the large ungainly moving structures results in public pressure to block installation planning permission. This public protest results in a reduction in the total possible wind power installation.

Smaller and lighter generators that could be powered by wind speeds between 3m/s and 15m/s would be easier and cheaper to install and would operate during a larger time period over the course of a year. If the generators were smaller, static without large moving parts they could gain acceptance for installation in well-populated urban areas. Less pressure to block installation planning permission would result in larger deployment of wind power overall.

The object of the present invention is to provide an improved energy harvesting device, applicable to a static structure for wind power energy harvesting.

According to the invention there is provided a device for harvesting energy from a fluid flow, the device comprising:
- a pair of members between which fluid can flow, the members being relatively movable:
   o towards each other in response to flow between them acting to draw them towards each other and
   o away from each other in response to reduced flow acting to separate them and
- means for electrical generation on movement of the members towards and away from each other.

Normally one of the members is fixed and the other is movable or both of the members are movable.

Conveniently the or each movable member is convexly shaped towards the other, preferably in the manner of a convex surface of an aerofoil.

The or each movable member can be pivotally connected to a structurally fixed member, preferably at an upstream end thereof; alternatively it can be translationally connected to a structurally fixed member.

Preferably, the members are shaped and mounted to cause flow and flow induced force drawing them together to reduce on their approach towards each other to cause the flow to act on them to separate them with a concomitant increase in flow between them for renewed drawing of them together. Resilient return means for augmenting the flow induced separation of the members can be provided.

The electrical generation means can include respective complementary electrical elements on both of the members, or the electrical generation means includes an electrical element on the movable member or one of the movable members and a complementary element on another structurally fixed member.

The energy harvesting device can include means for its securement to a building or between two buildings. Preferably, the pair of members are more extensive in their direction of the flow and/or a direction laterally of the flow than their stroke of movement towards or away from each other.

The electrical generation means can be capacitive, inductive or piezo-electrical. Where it is capacitive, it can include a capacitor comprised of one or more layers of:
- an electric conducting material,
- an electrolyte,
- a negatively biased triboelectric material, and
- a positively biased triboelectric material.

It can be envisaged that the voltage or current is induced by a stack of capacitor plates, or a piezoelectric system, or a coil moving in a magnetic flux.

It can be envisaged that the electronics module can monitor the fluid flow and if the flow is low, then the amount of kinetic energy converted to electrical energy generated is reduced. If the flow is high, then the amount of kinetic energy converted to electrical energy generated is increased as more energy can be extracted for the same foil movement.

The device can be connected to an energy harvesting system which can be one of a chemical system, thermal system, biological system, or an electrical system.

In one embodiment there is a pair of curved foils placed side by side in mirror image with a front wind entry point and a rear wind exit point where the wind entering passes in between the inner faces of the foils with a pivot for each foil at the front end.

Two stacks of piezo-electric or capacitor plates mechanically held between the outer face of the foils and the inner face of the device's outer wall.

An electronics module connected to the stacks acting to optimally convert movement applied to the stacks into electrical energy for harvesting.

The arrangement can be such that when the foils pivot inwards such that their inner faces come close together, then the stacks are caused to expand and when the foils move away from each other the stacks are compressed, although through appropriate mechanical couplings, this causal sense of compression and expansion could be reversed.

Whilst the foils and outer walls or complementary members can be of any material preferably they are of very lightweight material such as carbon fibre. The precise shape of the foils is important in order the energy harvesting is optimal and the optimal shape of a given size foil can be achieved with the relevant computer modelling and wind tunnel tests of scaled models. However in principle they are shaped with an inner face curve such as the top of an aeroplane wing, so that fluid flow or air passing in between the inner faces speeds up and a reduction in pressure is obtained resulting in the foil inner faces being pushed towards each other due to a relative higher air pressure on the foils outer faces according to Bernoulli's principle. The inner face of the foils should be shaped and angled to provide a high angle of attack for incoming fluid or air flow when the inner faces are pushed towards each other resulting in the narrowing of the passage of airflow. When the inner faces come very close to each other and block the air flow, the air flow stops. The pressure of the wind impacting the front results in the inner faces being forced apart with the foils rotating on their pivots. As a result the foils begin to oscillate opening and closing and as a result this causes an expanding and compressing of the stacks.

Typically a computer controlled module would monitor the wind speed and foil motion and control the piezo-electric or capacitor plates such that the kinetic to electrical conversion energy occurs in an optimal manner. Specifically the aim would be to control the piezo-electric or capacitor plate based harvesting process so that the load force of the electrical device on the foils is of the similar magnitude and similar natural frequency as the natural oscillation of the foils opening and closing.

It is well known that when a capacitor made of two adjacent plates separated by a distance d, holds a charge Q, then for a capacitance value of C, there will exist a voltage V between the two plates. To separate the plates, increasing distance d, requires a force and energy must be applied. If the plates are separated increasing the distance d, then the voltage V will rise and the capacitance value will fall. The rise in voltage may be used to drive a load or to move charge to an electrical storage unit. Since charge moves to the storage unit, the value of Q falls as V falls. When the distance d is returned to its original value no change in voltage as seen before will occur with any forced movement, unless something else drives charge into the capacitor.

The above also holds true if the capacitor originally contained no charge but was subject to a voltage V applied to it, thus creating the charge Q. Increasing d in this case still leads to the possibility of converting the energy applied to moving the plates into electrical energy as the voltage rise higher than the initial applied voltage.

In this invention tribo-electric charging is used to provide the charge required per cycle of compression and expansion and selectively the electronics can add further charge from the electrical storage.

In the case of capacitor plates in the stack, the stack comprises large areas of stacked plates typically made of layers of aluminium, electrolyte, aluminium, nylon, polyvinylchloride, aluminium, electrolyte, aluminium, nylon, polyvinylchloride, aluminium and so on. Materials stated here are typical and close alternatives can equally be used. When foil forces act they cause the stack to become separated through expansion, the separation of the plates occurs in a sequence; first the nylon and PVC plates separate by around 100 microns. Since these two materials have different affinity for charges, the tribo-electric effect results in charges building on each material surface that had been in contact. So the nylon surface becomes positively charged and the PVC surface becomes negatively charged. As these layers are laminated to the aluminium layers the aluminium plates become charged through electrostatic induction and the aluminium plate laminated to the PVC becomes positively charged and the other plate laminated to the nylon layer becomes negatively charged. With the electrolyte layer separating the aluminium plates the three layers form a capacitor with voltage across the plates resulting due to the charges on the plates.

As the foil forces separate the aluminium plates, the voltage rises. The electronics monitors V and at the right time switches it to charge a storage unit. The aluminium plates become charged less when all charge on them has been transferred via the load. When the foils compress the stack back to its original state, there occurs an effective reset of all charges. When the stack is expanded the tribo-electric effect again recharges the plates and the cycle can repeat indefinitely.

The computer and electronics may also perform two further functions. The computer may monitor the wind condition and if the wind is low then the computer can drive the electronics so as to conduct charge away from the aluminium plates. If this is done very early in the expansion process then the force of attraction between plates is low and can be overcome by the low wind speed low level foil forces. Alternatively when the wind flow is high, the computer can drive the electronics so that a proportion of the stored accumulated voltage in the storage unit maybe used to additionally pre-charge the aluminium plates prior to expansion. This additional charging makes the attractive forces between the plates higher and more energy can be extracted for the same expansion distance as the foils move with high force. In this way the electrical energy harvesting may be automatically tuned to match wind conditions so that energy transfer is optimised.

The energy stored in the storage unit may be used to either charge other batteries or converted using DC to AC converters to provide mains electricity.

To help the understanding of the invention, a specific embodiment thereof will now be described by way of example and with reference to the accompanying drawings, in which:
Figure 1 shows the cross section of a typical embodiment showing the outer walls, the foils the stacks and the wind inflow and exit;
Figure 2a, b, c, d and e show the progression of the foil movement and the stack expansion;
Figure 3a, b and c show the makeup of one stack section and the stack expansion cycle.

In the following description one type of embodiment is described although various alternatives are also applicable. For example the energy conversion stack may be piezo-electric or capacitor based or another known kinetic to electrical energy conversion due to expansion and contraction.

In the following is described an arrangement where the stack expands due to low pressure according to the Bernoulli Principle and compression results due to Newtonian reaction to the incoming wind pressure. In another embodiment the mechanical coupling could be designed so that the causal effect of forces is reversed.

Referring to the drawings, a wind energy harvester 1 is shown, with outer walls 2 and curved foil surfaces 3 and 4 pivoted about 8. Wind or fluid flow occurs entering at 9 and exiting at 10. An electrical energy harvesting stack 6 is attached by a coupling 7 to foil 3 outer face. The other side of the stack is coupled to the outer wall with coupling 5. The same arrangement is seen on the other foil.

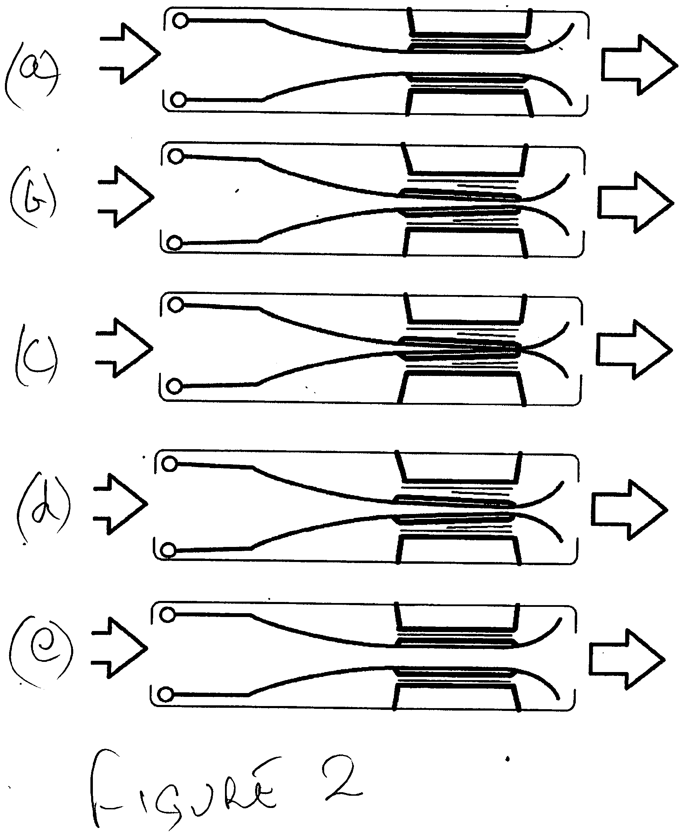

Referring to Figure 2, when fluid such as wind enters the device Figure 2a shows the foils separated and wind flows first at the same speed. However the speed becoming higher as it flows via the narrower curved gap. The air pressure in the narrow gap is smaller than on the foil outer faces and the foils are pulled towards each other. This causes the stack to expand, see Figure 2b

At one point the gap is too narrow and the low pressure forces collapse as shown in Figure 2c. Now the incoming wind forces the foils apart, as shown in Figure 2d, causing a compression of the stacks. This continues until the foils are as wide apart as possible Figure 2e, and the cycle repeats.

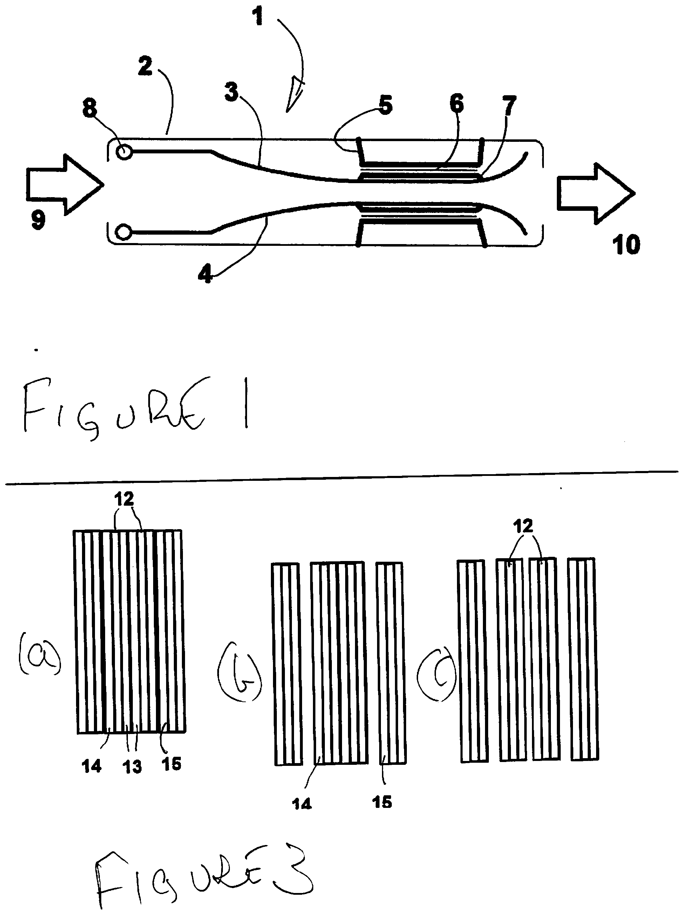

Figure 3 shows a section of the cross section of the capacitor stack. This description starts at the centre of the stack and progresses outwards left and right. In the very centre are two layers of electrolyte 13, such as silicone, laminated to two aluminium layers 12, on either side. While each of the silicone layers adheres to the aluminium there is no adherence between the two silicone layers. On the opposite sides of the first aluminium layers is laminated a layer of PVC 14. On the opposite sides of the second aluminium layers is laminated a layer of Nylon 15.

Next in the stack is a second Nylon layer touching the first PVC layer that is laminated to the first aluminium. A second PVC layer touches the first nylon layer that is laminated to the second aluminium. The touching layers that are not laminated maintain touching contact due to the compression of the stack. But when expansion occurs these layers move apart just sufficiently so as to lose contact. As the expansion progresses then the two electrolyte silicone layers separate.

Figure 4a, b, c, d, e shows the cycle during expansion and compression. Figure 4 a, shows the stack compressed. Figure 4 b shows the separation of the non-laminated PVC and nylon layers. When they separate the PVC becomes positively charged and the nylon becomes negatively charged. By electrostatic induction the aluminium plates receive a positive and negative charge respectively.

In figure 4c the aluminium plates and electrolyte layers pull apart. As this occurs the voltage between the two aluminium plates rises and can be used to charge a load, not shown. The aluminium plates give off their charge into the load. When the stack is compressed all charges are neutralised before the cycle can repeat.

The invention is not intended to be restricted to the details of the above described embodiment. For instance, there may be only one foil, the electric means for inducing a current or voltage may be located on the complementary surface as opposed to the complementary member or outer wall.

The means for converting kinetic energy into electrical energy could be a piezoelectric or a coil moving in a magnetic flux as opposed to a capacitive method. The complementary member could be indirectly attached to the pivot as opposed to being directly connected.

## Claims

1. A device for harvesting energy from a fluid flow, the device comprising:
• a pair of members between which fluid can flow, the members being relatively movable:
• towards each other in response to flow between them acting to draw them towards each other and
• away from each other in response to reduced flow acting to separate them and
• means for electrical generation on movement of the members towards and away from each other.

2. An energy harvesting device as claimed in claim 1, wherein one of the members is fixed and the other is movable or both of the members are movable.

3. An energy harvesting device as claimed in any preceding claim, wherein the or each movable member is convexly shaped towards the other, preferably in the manner of a convex surface of an aerofoil.

4. An energy harvesting device as claimed in any preceding claim, wherein the or each movable member is pivotally connected to a structurally fixed member, preferably at an upstream end thereof, or translationally connected to a structurally fixed member.

5. An energy harvesting device as claimed in any preceding claim, wherein the members are shaped and mounted to cause flow and flow induced force drawing them together to reduce on their approach towards each other to cause the flow to act on them to separate them with a concomitant increase in flow between them for renewed drawing of them together.

6. An energy harvesting device as claimed in 8 claim, including resilient return means for augmenting the flow induced separation of the members.

7. An energy harvesting device as claimed in any preceding claim, wherein the electrical generation means includes respective complementary electrical elements on both of the members, or the electrical generation means includes an electrical element on the movable member or one of the movable members and a complementary element on another structurally fixed member.

8. An energy harvesting device as claimed in any preceding claim, including a flow speed enhancing inlet track to the pair of members and/or a flow speed decelerating outlet track from the pair of members.

9. An energy harvesting device as claimed in any preceding claim, including means for its securement to a building or between two buildings.

10. An energy harvesting device as claimed in any preceding claim, wherein the pair of members are more extensive in their direction of the flow and/or a direction laterally of the flow than their stroke of movement towards or away from each other.

11. An energy harvesting device as claimed in any preceding claim, wherein the electrical generation means is capacitive, inductive or piezo-electrical.

12. An energy harvesting device as claimed in claim 11, wherein the electrical generation means is capacitive and includes a capacitor comprised of one or more layers of:
• an electric conducting material,
• an electrolyte,
• a negatively biased triboelectric material, and
• a positively biased triboelectric material.

13. An energy harvesting device as claimed in any preceding claim, wherein the:
• conductor material is aluminium,
• electrolyte is silicone,
• positive triboelectric material is nylon,
• negative triboelectric material is polyvinylchloride (PVC).

14. An energy harvesting device as claimed in any preceding claim, further comprising an electronics module to control the load force of the electrical device on the or each foil is of similar magnitude to a natural oscillation of the or each foil opening and closing.

15. An energy harvesting device as claimed in claim 14, wherein the electronics module is adapted to monitor the fluid flow and:
• if the flow is low, then charge is conducted away from the aluminium plates early in the expansion of the capacitor to reduce the force of attraction between the plates,
• if the flow is high, stored voltage can pre charge the plates prior to the expansion of the capacitor, this increases the attractive forces in the plates and more energy can be extracted for the same foil movement
